# EUROPEAN PATENT APPLICATION

(11) **EP 4 742 522 A1**
(43) Date of publication of application: **13.05.2026**
(21) Application number: 24854306.8
(22) Date of filing: 03.07.2024
(51) Int. Cl.: H02M 1/32, H02M 3/335, H02M 3/337

(54) **POWER CONVERSION DEVICE**

(30) Priority: 16.08.2023 KR 20230107217
(71) Applicant: LG Energy Solution, Ltd., Seoul 07335 (KR)
(72) Inventor: JEONG, Doo Ho, Daejeon 34122 (KR)
(74) Representative: Goddar, Heinz J.
(86) International application number: PCT/KR2024/009416
(87) International publication number: WO 2025/037754

(57) **Abstract**

A power conversion apparatus according to an embodiment disclosed herein includes a first switch and a second switch serially connected at a first node, a third switch and a fourth switch connected to the first switch at a second node, a fifth switch connected to the third switch at a third node, a sixth switch connected to the fifth switch at a fourth node, a seventh switch and an eighth switch connected to the fifth switch at a fifth node, a ninth switch connected to the eighth switch at a sixth node, a tenth switch connected to the seventh switch at a seventh node, an eleventh switch connected to the tenth switch at an eighth node, and a transformer connected to the first node, the fourth node, the sixth node, and the eighth node, in which the first switch, the second switch, the fifth switch, and the sixth switch are switches for primary-side power conversion, and the eighth switch, the ninth switch, the tenth switch, and the eleventh switch are switches for secondary-side power conversion.

## Description

### [TECHNICAL FIELD]

### CROSS-REFERENCE TO RELATED APPLICATION

This application claims priority to and the benefit of Korean Patent Application No. 10-2023-0107217 filed in the Korean Intellectual Property Office on August 16, 2023, the entire content of which is incorporated herein by reference.

### TECHNICAL FIELD

Embodiments disclosed herein relate to a power conversion apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

To stably supply power to batteries or power of batteries to other devices, power conversion apparatuses are required. In case of a failure of a power conversion apparatus, conventionally, two power conversion apparatuses are connected in parallel such that when one of them has a failure, the other power conversion apparatus supplies power. In this case, two power conversion apparatuses are used, increasing cost and securing an additional mounting space.

### [DISCLOSURE]

### [TECHNICAL PROBLEM]

Embodiments disclosed herein aim to provide a power conversion apparatus in which in case of an internal failure of one power conversion apparatus, bypass power may be supplied by changing an internal power topology, thereby stably supplying power.

Technical problems of the embodiments disclosed herein are not limited to the above-described technical problems, and other unmentioned technical problems would be clearly understood by one of ordinary skill in the art from the following description.

### [TECHNICAL SOLUTION]

A power conversion apparatus according to an embodiment disclosed herein includes a first switch and a second switch serially connected at a first node, a third switch and a fourth switch connected to the first switch at a second node, a fifth switch connected to the third switch at a third node, a sixth switch connected to the fifth switch at a fourth node, a seventh switch and an eighth switch connected to the fifth switch at a fifth node, a ninth switch connected to the eighth switch at a sixth node, a tenth switch connected to the seventh switch at a seventh node, an eleventh switch connected to the tenth switch at an eighth node, and a transformer connected to the first node, the fourth node, the sixth node, and the eighth node, in which the first switch, the second switch, the fifth switch, and the sixth switch are switches for primary-side power conversion, and the eighth switch, the ninth switch, the tenth switch, and the eleventh switch are switches for secondary-side power conversion.

In an embodiment, the second node may be a node to which voltage is input, and the third node and the seventh node are nodes from which voltage is output, and the second switch, the sixth switch, the ninth switch, and the eleventh switch may be connected to ground.

In an embodiment, the power conversion apparatus may further include a controller configured to control operations of the first switch to the eighth switch, in which the controller is further configured to control the third switch and the seventh switch to be turned on and the fourth switch to be turned off, when all of the switches for primary-side power conversion and the switches for secondary-side power conversion are normal.

In an embodiment, the controller may be further configured to control the third switch and the seventh switch to be turned off and the fourth switch to be turned on, when at least any one of the switches for primary-side power conversion is abnormal.

In an embodiment, the controller may be further configured to control the third switch, the fourth switch, and the seventh switch to be turned off, when at least any one of the switches for secondary-side power conversion is abnormal.

In an embodiment, the third node and the seventh node may be nodes from which voltage is output, voltage may be output through the seventh node when all of the switches for secondary-side power conversion are normal, and voltage may be output through the third node when at least any one of the switches for secondary-side power conversion is abnormal.

In an embodiment, the power conversion apparatus may further include a twelfth switch that connects the third node to the seventh node, in which it is determined whether voltage is to be output to the third node or the seventh node through an operation of the twelfth switch.

A power conversion apparatus according to an embodiment disclosed herein includes a primary-side power conversion apparatus including a thirteenth switch and a secondary-side power conversion apparatus connected to the primary-side power conversion apparatus through a transformer and including a fourteenth switch, in which the primary-side power conversion apparatus and the secondary-side power conversion apparatus are connected to the transformer through a fifteenth switch in different lines, and the thirteenth switch, the fourteenth switch, and the fifteenth switch operate based on whether the primary-side power conversion apparatus and the secondary-side power conversion apparatus are abnormal.

In an embodiment, the power conversion apparatus may further include a controller configured to control operations of the thirteenth switch, the fourteenth switch, and the fifteenth switch, in which the controller is further configured to control the thirteenth switch and the fourteenth switch to be turned on and the fifteenth switch to be turned off, when both the primary-side power conversion apparatus and the secondary-side power conversion apparatus are normal.

In an embodiment, the controller may be further configured to control the thirteenth switch and the fourteenth switch to be turned off and the fifteenth switch to be turned on, when the primary-side power conversion apparatus is abnormal.

In an embodiment, the controller may be further configured to control the thirteenth switch, the fourteenth switch, and the fifteenth switch to be turned off, when the secondary-side power conversion apparatus is abnormal.

In an embodiment, voltage may be output from the primary-side power conversion apparatus when the secondary-side power conversion apparatus is abnormal, and voltage may be output from the secondary-side power conversion apparatus when the secondary-side power conversion apparatus is normal.

In an embodiment, the primary-side power conversion apparatus, the secondary-side power conversion apparatus, and the transformer may operate with a dual active bridge power topology, and the power conversion apparatus may operate with the 4-switch buck boost topology through operations of the thirteenth switch, the fourteenth switch, and the fifteenth switch when any one of the primary-side power conversion APPARATUS OR THE SECONDARY-SIDE POWER CONVERSION APPARATUS IS ABNORMAL.

### [ADVANTAGEOUS EFFECTS]

A power conversion apparatus according to an embodiment disclosed herein may stably supply power by bypassing several failure situations that may occur during an operation, and increase the degree of freedom for cost and mounting space.

Moreover, a power conversion apparatus according to an embodiment disclosed herein may supply bypass power by changing a dual active bridge power topology into a 4-switch buck boost topology in the event of an internal failure in the dual active bridge power topology.

Moreover, various effects recognized directly or indirectly from the disclosure may be provided.

### [DESCRIPTION OF DRAWINGS]

FIG. 1 is a view showing a configuration of a conventional power conversion apparatus.
FIG. 2 is a view showing a power conversion apparatus according to an embodiment disclosed herein.
FIGS. 3 and 4 show an example in which a power conversion apparatus according to an embodiment disclosed herein supplies power through bypass.
FIG. 5 is a block diagram of a power conversion apparatus according to an embodiment disclosed herein.
FIG. 6 is a block diagram showing a hardware configuration of a computing system for performing an operating method of a power conversion apparatus, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

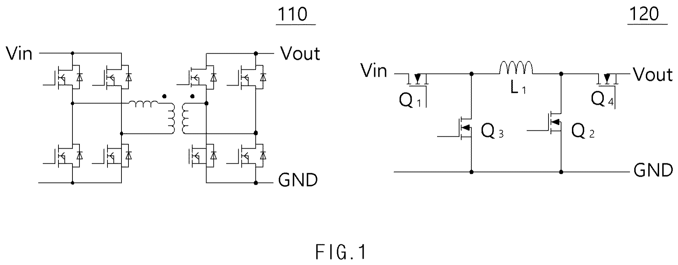

FIG. 1 is a view showing a configuration of a conventional power conversion apparatus.

Referring to FIG. 1, the conventional power conversion apparatus may include a dual active bridge power topology 110. For example, the dual active bridge power topology 110 may include eight switches and a transformer.

The dual active bridge power topology 110 may operate such that upon input of voltage from a primary side, the voltage is output from a secondary side.

According to an embodiment, the entire dual active bridge power topology 110 may be unavailable when a failure occurs in at least any one of switches included in the dual active bridge power topology 110.

A 4-switch buck boost topology 120 may include a plurality of switches Q₁, Q₂, Q₃, Q₃, and an inductor L₁.

The 4-switch buck boost topology 120 may also receive and output voltage.

Both the dual active bridge power topology 110 and the 4-switch buck boost topology 120 may be circuits capable of converting power, and when at least any one element of switches, inductors, etc., included in the dual active bridge power topology 110 and the 4-switch buck boost topology 120 has a failure, the entire topology may not be available.

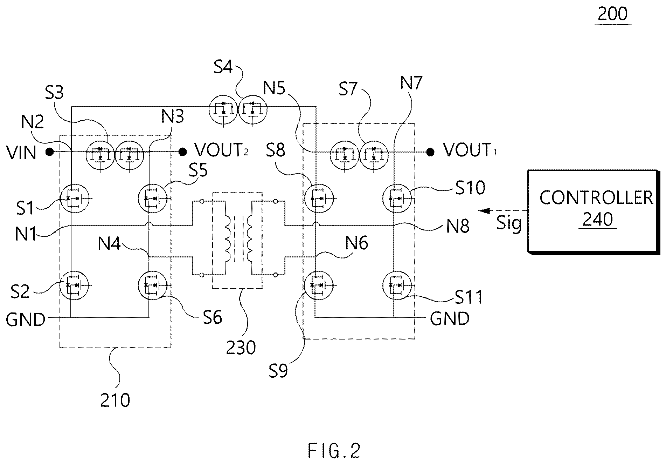

FIG. 2 is a view showing a power conversion apparatus according to an embodiment disclosed herein.

Referring to FIG. 2, the power conversion apparatus 200 according to an embodiment disclosed herein may include a plurality of switches S1 to S11 and a transformer 230. According to an embodiment, the power conversion apparatus 200 may further include a controller 240.

The first switch S1 and the second switch S2 may be serially connected at a first node N1.

The third switch S3 and the fourth switch S4 may be connected to the first switch S1 at a second node N2. For example, the third switch S3 and the fourth switch S4 may be connected in parallel to each other.

The fifth switch S5 may be connected to the third switch S3 at a third node N3.

The sixth switch S6 may be connected to the fifth switch S5 at a fourth node N4.

The seventh switch S7 and the eighth switch S8 may be connected to the fifth switch S5 at a fifth node N5. For example, the seventh switch S7 and the eighth switch S8 may be connected in parallel to each other.

The ninth switch S9 may be connected to the eighth switch S8 at a sixth node N6.

The tenth switch S10 may be connected to the seventh switch S7 at a seventh node N7.

The eleventh switch S11 may be connected to the tenth switch S10 at an eighth node N8.

According to an embodiment, one end of each of the second switch S2, the sixth switch S6, the ninth switch S9, and the eleventh switch S11 may be connected to ground.

According to an embodiment, the power conversion apparatus 200 may include the transformer 230 connected to the first node N1, the fourth node N4, the sixth node N6, and the eighth node N8. The transformer 230 may perform the same operation as a transformer well known in the art.

According to an embodiment, the first switch S1, the second switch S2, the fifth switch S5, and the sixth switch S6 may be switches 210 for primary-side power conversion.

According to an embodiment, the eighth switch S8, the ninth switch S9, the tenth switch S10, and the eleventh switch S11 may be switches 220 for secondary-side power conversion.

According to an embodiment, the first switch S1 to the eleventh switch S11 may include a MOSFET or a BJT.

According to an embodiment, the second node N2 may be a node to which voltage is input, and the third node N3 and the seventh node N7 may be nodes from which voltage is output. For example, voltage may be output from any one of the third node N3 and the seventh node N7.

The controller 240 may control operations of the first switch S1 to the eleventh switch S11. For example, the controller 240 may control the operations of the first switch S1 to the eleventh switch S11 to convert power, determine a node from which voltage is to be output, and control each of the first switch S1 to the eleventh switch S11 to allow current to flow in a bypass manner when at least any one of the first switch S1 to the eleventh switch S11 has a failure.

According to an embodiment, the controller 240 may control the third switch S3 and the seventh switch S7 to be turned on and control the fourth switch S4 to be turned off, when all of the switches 210 for primary-side power conversion and the switches 220 for secondary-side power conversion are normal. That is, in this case, when the voltage is input through the second node N2, the fourth switch S4 is in an off state and thus current does not flow toward the fourth switch S4, such that power may be converted in a dual active bridge topology manner. According to an embodiment, when all of the switches 210 for primary-side power conversion and the switches 220 for secondary-side power conversion are normal, the voltage may be output from the seventh node N7. In this case, the controller 240 may control the other switches than the third switch S3, the fourth switch S4, and the seventh switch S7 such that power is converted in the dual-active bridge topology manner.

According to an embodiment, the controller 240 may control the third switch S3 and the seventh switch S7 to be turned off and control the fourth switch S4 to be turned on, when at least any one of the switches 210 for primary-side power conversion is abnormal.

According to an embodiment, the controller 240 may control the third switch S3, the fourth switch S4, and the seventh switch S7 to be turned off, when at least any one of the switches 220 for secondary-side power conversion is abnormal.

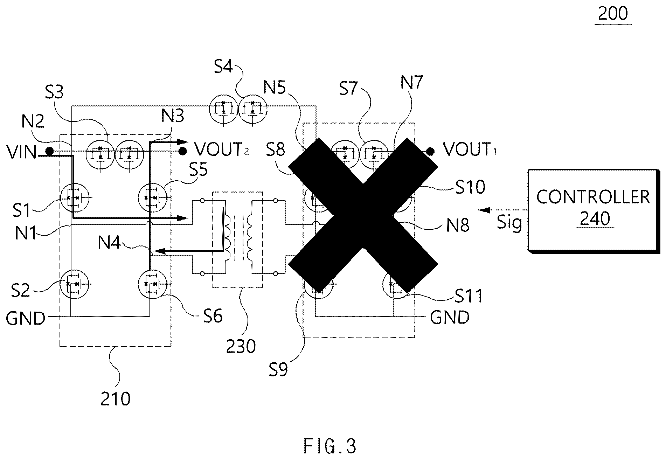

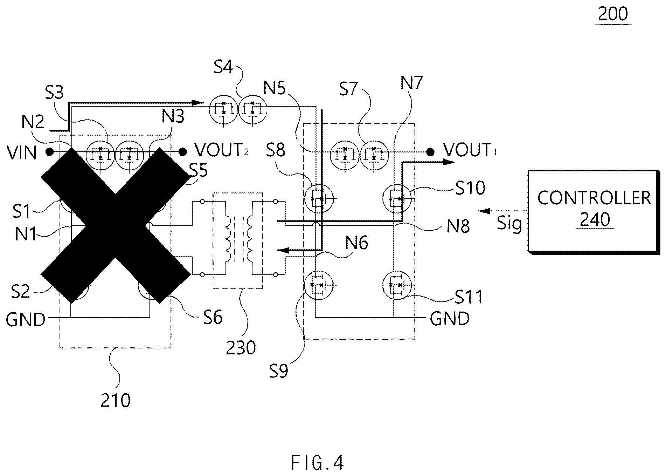

FIGS. 3 and 4 show an example in which a power conversion apparatus according to an embodiment disclosed herein supplies power through bypass.

Referring to FIG. 3, the controller 240 may control the third switch S3, the fourth switch S4, and the seventh switch S7 to be turned off, when at least any one of the switches 220 for secondary-side power conversion is abnormal.

In this case, upon input of voltage to the second node N2, the current may flow to the first node N1 through the first switch S1 because the current fails to flow through the third switch S3 or the fourth switch S4, and then the current may flow to the fourth node N4 through the transformer 230. The current may also flow from the fourth node N4 through the fifth switch S5 and may be output through the third node N3. That is, when the third switch S3, the fourth switch S4, and the seventh switch S7 are in the off state, the power conversion apparatus 200 may operate with the 4-switch buck boost topology. In this case, the controller 240 may control the first switch S1, the second switch S2, the fifth switch S5, and the sixth switch S6 to operate with the 4-switch buck boost topology. As the seventh switch S7 is in the off state and the eighth switch S8 to the eleventh switch S11 are controlled not to operate, the current may not flow through the switches 220 for secondary-side power conversion such that the current may not be delivered to the switches 220 for secondary-side power conversion through the transformer 230.

Referring to FIG. 4, the controller 240 may control the third switch S3 and the seventh switch S7 to be turned off and control the fourth switch S4 to be turned on, when at least any one of the switches 210 for primary-side power conversion is abnormal.

In this case, upon input of voltage to the second node N2, the current may not flow to the third switch S3 and may flow to the fourth switch. The controller 240 may control the first switch S1, the second switch S2, the fifth switch S5, and the sixth switch S6 not to operate.

The current flowing to the fifth node N5 through the fourth switch S4 may flow to the eighth switch S8 because the seventh switch S7 is in the off state. The current may flow from the sixth node N6 to the eighth node N8 through the transformer 230 and may be output from the seventh node N7 through the tenth node S10. That is, when the third switch S3 and the seventh switch S7 are in the off state and the fourth switch S4 are in the on state, the power conversion apparatus 200 may operate with the 4-switch buck boost topology. In this case, the controller 240 may control the eighth switch S8, the ninth switch S9, the tenth switch S 10, and the eleventh switch S11 to operate with the 4-switch buck boost topology.

That is, the power conversion apparatus 200 according to an embodiment disclosed herein may control the switches 220 for secondary-side power conversion to operate with the 4-switch buck boost topology when at least any one of the switches 210 for primary-side power conversion has a failure, and control the switches 210 for primary-side power conversion to operate with the 4-switch buck boost topology when at least any one of the switches 220 for secondary-side power conversion has a failure, thereby preparing for a switch failure.

Referring back to FIG. 2, the third node N3 and the seventh node N7 may be nodes from which voltage is output. For example, the power conversion apparatus 200 may output voltage through the seventh node N7 when all of the switches 220 for secondary-side power conversion are normal, and output voltage through the third node N3 when at least any one of the switches 220 for secondary-side power conversion is abnormal.

According to an embodiment, the power conversion apparatus 200 may further include a twelfth switch (not shown) that connects the third node N3 to the seventh node N7, and determine whether voltage is to be output to the third node N3 or the seventh node N7 through an operation of the twelfth switch. For example, the controller 240 of the power conversion apparatus 200 may control the operation of the twelfth switch, and control the twelfth switch to be in the off state so as to output the voltage through the seventh node N7 when all of the switches 220 for secondary-side power conversion are normal. In another example, the controller 240 of the power conversion apparatus 200 may control the twelfth switch to be turned on so as to output an output of the third node N3 through the seventh node N7 when at least any one of the switches 220 for secondary-side power conversion is abnormal.

The power conversion apparatus 200 according to an embodiment disclosed herein may stably supply power by bypassing several failure situations that may occur during an operation, and increase the degree of freedom for cost and mounting space.

Moreover, the power conversion apparatus 200 according to an embodiment disclosed herein may supply bypass power by changing the dual active bridge power topology into the 4-switch buck boost topology in the event of an internal failure in the dual active bridge power topology.

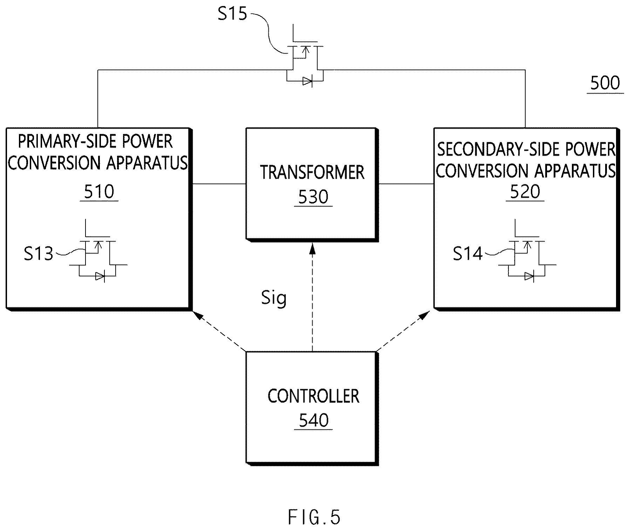

FIG. 5 is a block diagram of a power conversion apparatus according to an embodiment disclosed herein.

Referring to FIG. 5, a power conversion apparatus 500 according to an embodiment disclosed herein may include a primary-side power conversion apparatus 510, a secondary-side power conversion apparatus 520, and a transformer 530. According to an embodiment, the power conversion apparatus 500 may further include a controller 540.

The primary-side power conversion apparatus 510 may include a thirteenth switch S13. For example, the primary-side power conversion apparatus 510 may further include a plurality of switches in addition to the thirteenth switch S13.

The secondary-side power conversion apparatus 520 may include a fourteenth switch S14. For example, the secondary-side power conversion apparatus 520 may further include a plurality of switches in addition to the fourteenth switch S14.

The primary-side power conversion apparatus 510 and the secondary-side power conversion apparatus 520 may be connected through the transformer 530. In addition, the primary-side power conversion apparatus 510 and the secondary-side power conversion apparatus 520 may be connected to the transformer 530 through a fifteenth switch S15 in different lines.

The thirteenth switch S13, the fourteenth switch S14, and the fifteenth switch S15 may operate based on whether the primary-side power conversion apparatus 510 and the secondary-side power conversion apparatus 520 are abnormal. For example, the controller 540 may control the thirteenth switch S13, the fourteenth switch S14, and the fifteenth switch S15. According to an embodiment, the controller 540 may control operations of the primary-side power conversion apparatus 510 and the secondary-side power conversion apparatus 520.

According to an embodiment, the controller 540 may control the thirteenth switch S13 and the fourteenth switch S14 to be turned on and control the fifteenth switch S15 to be turned off, when both of the primary-side power conversion apparatus 510 and the secondary-side power conversion apparatus 520 are normal.

According to an embodiment, the controller 540 may control the thirteenth switch S13 and the fourteenth switch S14 to be turned off and control the fifteenth switch S15 to be turned on, when the primary-side power conversion apparatus 510 is abnormal. For example, the controller 540 may control the thirteenth switch S 13 to be turned off when the primary-side power conversion apparatus 510 is abnormal, thereby controlling the current not to flow to the primary-side power conversion apparatus 510 and controlling the current to flow through the fifteenth switch S15 and to flow to the secondary-side power conversion apparatus 520.

According to an embodiment, the controller 540 may control the thirteenth switch S13, the fourteenth switch S14, and the fifteenth switch S15 to be turned off, when the secondary-side power conversion apparatus 520 is abnormal. For example, the controller 540 may control the fourteenth switch S14 and the fifteenth switch S15 to be turned off when the secondary-side power conversion apparatus 520 is abnormal, thereby controlling the current not to flow to the secondary-side power conversion apparatus 520 and controlling the current to flow to the primary-side power conversion apparatus 510.

According to an embodiment, in the power conversion apparatus 500, the primary-side power conversion apparatus 510 may output voltage when the secondary-side power conversion apparatus 520 is abnormal, and the secondary-side power conversion apparatus 520 may output voltage when the secondary-side power conversion apparatus 520 is normal.

According to an embodiment, the primary-side power conversion apparatus 510, the secondary-side power conversion apparatus 520, and the transformer 530 may operate with the dual active bridge power topology. For example, the controller 540 may control the primary-side power conversion apparatus 510, the secondary-side power conversion apparatus 520, and the transformer 530 to operate with the dual active bridge power topology when the primary-side power conversion apparatus 510 and the secondary-side power conversion apparatus 520 are not abnormal.

According to an embodiment, when any one of the primary-side power conversion apparatus 510 or the secondary-side power conversion apparatus 520 is abnormal, the power conversion apparatus 500 may operate with the 4-switch buck boost topology through operations of the thirteenth switch S13, the fourteenth switch S14, and the fifteenth switch S15. For example, the controller 540 may control to operate with the 4-switch buck boost topology through the secondary-side power conversion apparatus 520 when the primary-side power conversion apparatus 510 is abnormal, and to operate with the 4-switch buck boost topology through the primary-side power conversion apparatus 510 when the secondary-side power conversion apparatus 520 is abnormal.

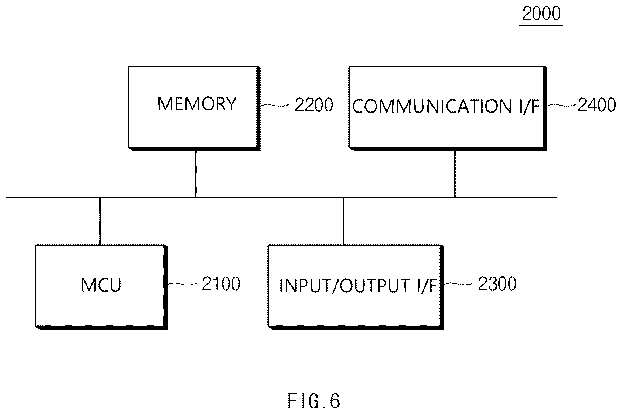

FIG. 6 is a block diagram showing a hardware configuration of a computing system for performing an operating method of a power conversion apparatus, according to an embodiment disclosed herein.

FIG. 6 is a block diagram showing a hardware configuration of a computing system for performing an operating method of a power conversion apparatus, according to an embodiment disclosed herein.

Referring to FIG. 6, a computing system 2000 according to an embodiment disclosed herein may include an MCU 2100, a memory 2200, an input/output I/F 2300, and a communication I/F 2400.

The MCU 2100 may be a processor that executes various programs (e.g., a switch operation control program, a power conversion apparatus control program, a switch abnormality determination program, etc.) stored in the memory 2200, processes various information including an operation of a switch, whether a switch is abnormal, etc., through these programs, and executes the above-described functions of the controller included in the power conversion apparatus shown in FIG. 2.

The memory 2200 may store various programs such as the switch operation control program, the power conversion apparatus control program, the switch abnormality determination program, etc. Moreover, the memory 2200 may store various information including an operation of a switch, whether a switch is abnormal, etc.

The memory 2200 may be provided in plural, depending on a need. The memory 2200 may be volatile memory or non-volatile memory. For the memory 2200 as the volatile memory, random access memory (RAM), dynamic RAM (DRAM), static RAM (SRAM), etc., may be used. For the memory 2200 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 2200 are merely examples and are not limited thereto.

The input/output I/F 2300 may provide an interface for transmitting and receiving data by connecting an input device (not shown) such as a keyboard, a mouse, a touch panel, etc., and an output device such as a display (not shown), etc., to the MCU 2100.

The communication I/F 2400, which is a component capable of transmitting and receiving various data to and from a server, may be various devices capable of supporting wired or wireless communication. For example, the power conversion apparatus may transmit and receive various information including an operation of the switch, whether abnormality occurs in the switch, etc., from an external server separately provided through the communication I/F 2400.

As such, a computer program according to an embodiment disclosed herein may be recorded in the memory 2200 and processed by the MCU 2100, thus being implemented as a module that performs functions shown in FIG. 2.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

### [Description of Symbols]

110: Dual Active Bridge Power Topology
120: 4-Switch Buck Boost Topology
200: Power Conversion Apparatus
210: Switches for Primary-Side Power Conversion
220: Switches for Secondary-Side Power Conversion
230: Transformer
240: Controller
500: Power Conversion Apparatus
510: Primary-Side Power Conversion Apparatus
520: Secondary-Side Power Conversion Apparatus
530: Transformer
540: Controller
2000: Computing System
2100: MCU
2200: Memory
2300: Input/Output I/F
2400: Communication I/F

## Claims

1. A power conversion apparatus comprising:
a first switch and a second switch serially connected at a first node;
a third switch and a fourth switch connected to the first switch at a second node;
a fifth switch connected to the third switch at a third node;
a sixth switch connected to the fifth switch at a fourth node;
a seventh switch and an eighth switch connected to the fifth switch at a fifth node;
a ninth switch connected to the eighth switch at a sixth node;
a tenth switch connected to the seventh switch at a seventh node;
an eleventh switch connected to the tenth switch at an eighth node; and
a transformer connected to the first node, the fourth node, the sixth node, and the eighth node,
wherein the first switch, the second switch, the fifth switch, and the sixth switch are switches for primary-side power conversion, and
the eighth switch, the ninth switch, the tenth switch, and the eleventh switch are switches for secondary-side power conversion.

2. The power conversion apparatus of claim 1, wherein the second node is a node to which voltage is input, and the third node and the seventh node are nodes from which voltage is output, and
the second switch, the sixth switch, the ninth switch, and the eleventh switch are connected to ground.

3. The power conversion apparatus of claim 1, further comprising a controller configured to control operations of the first switch to the eleventh switch,
wherein the controller is further configured to control the third switch and the seventh switch to be turned on and the fourth switch to be turned off, when all of the switches for primary-side power conversion and the switches for secondary-side power conversion are normal.

4. The power conversion apparatus of claim 3, wherein the controller is further configured to control the third switch and the seventh switch to be turned off and the fourth switch to be turned on, when at least any one of the switches for primary-side power conversion is abnormal.

5. The power conversion apparatus of claim 3, wherein the controller is further configured to control the third switch, the fourth switch, and the seventh switch to be turned off, when at least any one of the switches for secondary-side power conversion is abnormal.

6. The power conversion apparatus of claim 1, wherein the third node and the seventh node are nodes from which voltage is output,
voltage is output through the seventh node when all of the switches for secondary-side power conversion are normal, and
voltage is output through the third node when at least any one of the switches for secondary-side power conversion is abnormal.

7. The power conversion apparatus of claim 1, further comprising a twelfth switch that connects the third node to the seventh node,
wherein it is determined whether voltage is to be output to the third node or the seventh node through an operation of the twelfth switch.

8. A power conversion apparatus comprising:
a primary-side power conversion apparatus comprising a thirteenth switch; and
a secondary-side power conversion apparatus connected to the primary-side power conversion apparatus through a transformer and comprising a fourteenth switch,
wherein the primary-side power conversion apparatus and the secondary-side power conversion apparatus are connected to the transformer through a fifteenth switch in different lines, and
the thirteenth switch, the fourteenth switch, and the fifteenth switch operate based on whether the primary-side power conversion apparatus and the secondary-side power conversion apparatus are abnormal.

9. The power conversion apparatus of claim 8, further comprising a controller configured to control operations of the thirteenth switch, the fourteenth switch, and the fifteenth switch,
wherein the controller is further configured to control the thirteenth switch and the fourteenth switch to be turned on and the fifteenth switch to be turned off, when both the primary-side power conversion apparatus and the secondary-side power conversion apparatus are normal.

10. The power conversion apparatus of claim 9, wherein the controller is further configured to control the thirteenth switch and the fourteenth switch to be turned off and the fifteenth switch to be turned on, when the primary-side power conversion apparatus is abnormal.

11. The power conversion apparatus of claim 9, wherein the controller is further configured to control the thirteenth switch, the fourteenth switch, and the fifteenth switch to be turned off, when the secondary-side power conversion apparatus is abnormal.

12. The power conversion apparatus of claim 8, wherein voltage is output from the primary-side power conversion apparatus when the secondary-side power conversion apparatus is abnormal, and
voltage is output from the secondary-side power conversion apparatus when the secondary-side power conversion apparatus is normal.

13. The power conversion apparatus of claim 8, wherein the primary-side power conversion apparatus, the secondary-side power conversion apparatus, and the transformer operate with a dual active bridge power topology, and
the power conversion apparatus operates with the 4-switch buck boost topology through operations of the thirteenth switch, the fourteenth switch, and the fifteenth switch when any one of the primary-side power conversion apparatus or the secondary-side power conversion apparatus is abnormal.
